(19) Europäisches Patentamt
European Patent Office
Office européen des brevets

(11) **EP 3 661 041 B1**

(12) **EUROPÄISCHE PATENTSCHRIFT**

(45) Veröffentlichungstag und Bekanntmachung des Hinweises auf die Patenterteilung:
**15.09.2021 Patentblatt 2021/37**

(21) Anmeldenummer: **18208464.0**

(22) Anmeldetag: **27.11.2018**

(51) Int Cl.:
*H02M 5/10* (2006.01)    *H02M 1/00* (2006.01)
*G05B 19/406* (2006.01)    *H02H 7/045* (2006.01)
*H01F 27/40* (2006.01)

(54) **VERFAHREN ZUR ÜBERWACHUNG EINES TRANSFORMATORS**

METHOD FOR MONITORING A TRANSFORMER

PROCÉDÉ DE SURVEILLANCE D'UN TRANSFORMATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.06.2020 Patentblatt 2020/23**

(73) Patentinhaber: **Siemens Energy Global GmbH & Co. KG**
**81739 München (DE)**

(72) Erfinder:
• **Hecht, Fabian**
**91207 Lauf a. d. Pegnitz (DE)**
• **Brückel, Martin**
**91052 Erlangen (DE)**
• **Rosca, Cornel-Marian**
**92364 Deining (DE)**

(56) Entgegenhaltungen:
EP-A1- 1 923 765    DE-A1-102017 129 227
US-A1- 2015 309 085    US-A1- 2017 115 335
US-A1- 2017 220 011    US-B1- 10 015 184

**Beschreibung**

Die Erfindung betrifft ein Verfahren zur Überwachung mindestens eines Transformators.

Ferner betrifft die Erfindung eine Steuereinheit mit Mitteln zur Durchführung eines derartigen Verfahrens.

Darüber hinaus betrifft die Erfindung ein Computerprogramm zur Durchführung eines derartigen Verfahrens bei Ablauf in einer derartigen Steuereinheit.

Des Weiteren betrifft die Erfindung ein Computerprogrammprodukt mit einem Computerprogramm.

Überdies betrifft die Erfindung ein Umrichtersystem mit mindestens einem Umrichter, mindestens einem Transformator und einer derartigen Steuereinheit.

Zudem betrifft die Erfindung ein Antriebssystem mit mindestens einem derartigen Umrichtersystem.

Die EP 1 923 765 A1 zeigt einen Strang eines Verteilungsnetzes, das mehrerer Abschnitte mit unterschiedlichen Versorgungsspannungen aufweist. Zum Verändern der Spannung ist jeweils ein mit Anzapfungen versehener Transformator vorgesehen. Mit Hilfe eines Stufenschalters kann die ausgangsseitig bereit gestellte Spannung des jeweiligen Transformators eingestellt werden. Zum Ansteuern der Stufenschalter wird ein iteratives Verfahren verwendet. Um Ausreißer zu erkennen, werden Toleranzbänder eingesetzt.

Weiterer Stand der Technik ist aus der US 2017/115335 A1 und der US 10 015 184 B1 bekannt.

Transformatoren werden beispielsweise in Antriebssystemen verwendet, um einen Umrichter von einem Stromnetz galvanisch zu entkoppeln. Derartige Transformatoren umfassen gekoppelte Leitungen, wobei beispielsweise eine Wicklungsisolierung im Lauf der Zeit verschleißt und zu einem Wicklungskurzschluss oder einen Massekurzschluss führen kann. Derartige Kurzschlüsse führen meist zu Transformatorausfällen, welche sich in der Regel schnell entwickeln. Ein Transformatorausfall führt zu einem Ausfall des gesamten Antriebsstrangs, was zu kostspieligen Ausfallzeiten und zum Austausch des Transformators oder gar des gesamten Antriebssystems führt. Daher ist eine kontinuierliche Überwachung und Fehlererkennung erforderlich, um eine Trafoanomalie in einem frühen Stadium zu erkennen. Die Patentschrift DE 10 2013 217 672 B3 beschreibt einen Multilevel-Umrichter, wobei vorgeschlagen wird, ein Submodul des Multilevel-Umrichters um eine Kurzschließschaltung zu erweitern, so dass die Ladung des Kondensators des Submoduls kontrolliert, insbesondere stufenweise über mehrere Reihenschaltungen aus Kurzschließ- und Dämpfungselement, abgebaut werden kann.

Die Offenlegungsschrift EP 1 786 083 A1 beschreibt ein Verfahren und ein System zur Überwachung von Leistungstransformatoren, mit dem beginnende Ausfälle in einem Transformator erkannt werden sollen. Zu diesem Zweck werden nur Sensoren außerhalb des Transformators verwendet oder Sensoren, die installiert werden können, ohne dass der Transformator geöffnet werden muss. Die Erkennung der beginnenden Ausfälle erfolgt auf der Grundlage mathematischer Verhaltensmodelle, so dass zur Identifizierung der Fehlerbedingungen ein Satz von Messgrößen verglichen wird, wobei für jede Variable einige adaptive Schwellenwerte aus den Betriebsbedingungen des Transformators berechnet werden. Die mathematischen Modelle umfassen ein Wärmemodell, ein Vibrationsmodell und ein Modell der Feuchtigkeit im Öl.

Der Erfindung liegt die Aufgabe zugrunde, ein möglichst einfaches und zuverlässiges Verfahren zur Überwachung eines Transformators anzugeben.

Diese Aufgabe wird erfindungsgemäß durch ein Verfahren nach Anspruch 1 zur Überwachung mindestens eines Transformators gelöst, welches folgende Schritte umfasst: Erzeugen eines objektspezifischen analytischen Modells des Transformators und eines objektspezifischen Schwellwerts aus historischen Sensordaten, welche mindestens eine Eingangsspannung und eine Ausgangsspannung des Transformators umfassen, mit Hilfe eines Machine-Learning-Algorithmus, Vergleichen von aktuellen Sensordaten mit Werten aus dem objektspezifischen analytischen Modell, Kennzeichnen aktueller Sensordaten, welche um mehr als den objektspezifischen Schwellwert von den Werten aus dem objektspezifischen analytischen Modell abweichen, als anormale Werte und Ausgabe einer Warnung bei einer einstellbaren Anzahl von anormalen Werten, wobei das Modell eine objektspezifische Konstante umfasst, welche einer Differenz aus Effektivwerten mindestens einer Eingangsspannung und mindestens einer korrespondierenden Ausgangsspannung des Transformators entspricht, wobei die objektspezifische Konstante während der Modellbildungsphase automatisch an den jeweiligen Transformator (10) angepasst wird.

Ferner wird die Aufgabe erfindungsgemäß durch eine Steuereinheit nach Anspruch 10 mit Mitteln zur Durchführung eines derartigen Verfahrens gelöst, wobei die Mittel zumindest eine Sensorvorrichtung umfassen.

Darüber hinaus wird die Aufgabe erfindungsgemäß durch ein Computerprogramm nach Anspruch 11 zur Durchführung eines derartigen Verfahrens bei Ablauf in einer derartigen Steuereinheit gelöst.

Des Weiteren wird die Aufgabe erfindungsgemäß nach Anspruch 12 durch ein Computerprogrammprodukt mit einem Computerprogramm gelöst. Überdies wird die Aufgabe erfindungsgemäß durch ein Umrichtersystem nach Anspruch 13 mit mindestens einem Umrichter, mindestens einem Transformator und einer derartigen Steuereinheit gelöst.

Zudem wird die Aufgabe erfindungsgemäß durch ein Antriebssystem nach Anspruch 15 mit mindestens einem derartigen Umrichtersystem und mindestens einem Motor, welcher mit dem Umrichtersystem verbunden ist, gelöst.

Die in Bezug auf das Verfahren nachstehend angeführten Vorteile und bevorzugten Ausgestaltungen lassen sich sinngemäß auf die Steuereinheit, das Computerprogramm, das Computerprogrammprodukt, das Umrichtersystem und das Antriebssystem übertragen.

Der Erfindung liegt die Überlegung zugrunde, ein modellbasiertes Verfahren zur Überwachung eines Transformators anzugeben, wobei ein objektspezifisches analytisches Modell und ein objektspezifischer Schwellwert aus historischen Sensordaten mit Hilfe eines Machine-Learning-Algorithmus erstellt werden. Ein analytisches Modell basiert auf einer mathematischen Beschreibung des Verhaltens des Transformators und ist sowohl einfach als auch genau. Ein objektspezifisches Modell und ein objektspezifischer Schwellwert werden anhand der historischen Sensordaten für einen konkreten Transformator erzeugt und hängen von der Betriebsart, der Leistung, der Netzspannung und einer Vielzahl weiterer Parameter des Transformators ab. Ein Machine-Learning-Algorithmus benutzt beispielsweise ein neuronales Netz, welches mit den historischen Daten trainiert wird, und erzeugt ein präzises individuelles Modell. Zur Modell- und Schwellwerterzeugung werden mindestens eine Eingangsspannung und eine Ausgangsspannung des Transformators herangezogen, da diese Größen einfach und sehr präzise messbar sind. Modell und Schwellenwert stellen den normalen, ungestörten Zustand des Transformators und seine Grenzen dar. Um herauszufinden, ob eine Trafoanomalie vorliegt, werden aktuelle Sensordaten mit Werten aus dem objektspezifischen analytischen Modell verglichen. Aktuelle Sensordaten, welche um mehr als den objektspezifischen Schwellwert von den Werten aus dem objektspezifischen analytischen Modell abweichen, werden als anormale Werte gekennzeichnet, wobei eine Warnung bei einer einstellbaren Anzahl von anormalen Werten ausgegeben wird. Beispielsweise wird eine akustische Warnung ausgegeben, sodass ein möglicher Schaden bei einer frühzeitigen Erkennung einer Trafoanomalie begrenzt oder gar vermieden werden kann.

Durch eine Steuereinheit wird der Verfahrensablauf gesteuert. Die Mittel zur Durchführung eines derartigen Verfahrens umfassen beispielsweise einen Speicher, ein Computerprogramm und beispielweise einen Mikrocontroller oder einen anderen programmierbaren Logikbaustein, wodurch eine schnelle Signalverarbeitung ermöglicht wird.

In einer bevorzugten Ausführungsform werden die historischen Sensordaten zum Ausschließen unplausibler Werte vorverarbeitet. Die Vorverarbeitung dient dazu, unplausible Werte aufgrund von Sensorfehlern und Werte, die während des Aus-Zustandes des Antriebs gesammelt werden, zu eliminieren und sorgt für eine Verfeinerung des Modells und des Schwellwerts.

Erfindungsgemäß umfasst das Modell eine objektspezifische Konstante, welche einer Differenz aus mindestens einer Eingangsspannung und mindestens einer korrespondierenden Ausgangsspannung des Transformators entspricht. Insbesondere wird die objektspezifische Konstante während der Modellbildungsphase an den jeweiligen Transformator angepasst. Durch ein derartiges einfaches und individuelles Modell wird die Zuverlässigkeit des Überwachungsverfahrens erhöht.

Besonders vorteilhaft werden für die Eingangsspannung und die Ausgangsspannung jeweils der Maximalwert des Effektivwerts der jeweiligen Spannung verwendet. Durch die Verwendung des Effektivwerts der, insbesondere sinusförmigen, Signale wird, beispielsweise durch den Wegfall der Phasenbeziehungen, eine Berechnung vereinfacht. Durch die Verwendung des Maximalwerts innerhalb eines Intervalls, welches beispielswiese 30 sek dauert, wird die Datenrate der Sensordaten verringert. Dennoch werden punktuell auftretende Auffälligkeiten, insbesondere im Vergleich zu einer Mittelwertbildung, effektiver erfasst.

Bei einer bevorzugten Ausgestaltung ist das Modell durch den Zusammenhang $Vinrmsmax = Voutrmsmax + C$ darstellbar. Ein derartiger linearer Zusammenhang ist für ein zuverlässiges und einfaches Überwachungsverfahren ausreichend und gewährleistet eine geringe Reaktionszeit bei auftretenden Anomalien.

Bei einer weiteren vorteilhaften Ausführungsform wird das Modell zum Vergleich der aktuellen Sensordaten über eine Restful API abgerufen. REST steht hierbei für REpresentational State Transfer, API für Application Programming Interface. Die Programmierschnittstelle Restful API bedient sich standardisierter Verfahren, wie HTTP/S, URI, JSON oder XML und ist daher zuverlässig.

Besonders vorteilhaft wird eine Größe und/oder ein Zeitstempel der Abweichungen vom objektspezifischen analytischen Modell bereitgestellt. Durch derartige Zusatzinformationen sind zusätzliche Messungen vermeidbar, sodass die Reaktionszeit bei auftretenden Anomalien reduziert wird.

Bei einer weiteren vorteilhaften Ausführungsform wird bei einer einstellbaren Anzahl von anormalen Werten ein Nutzer und/oder ein Servicemitarbeiter automatisch gewarnt. Durch eine automatische Warnung einer zuständigen Person ermöglicht es das Überwachungsverfahren, auf eine Trafoanomalie in einem frühen Stadium zu reagieren.

In einer weiteren vorteilhaften Ausgestaltung wird die Warnung, insbesondere automatisch, über einen elektronischen Nachrichtendienst bereitgestellt. Elektronische Nachrichtendienste sind beispielsweise Email, SMS oder MMS. Durch eine Übertragung der Warnung über einen elektronischen Nachrichtendienst sind Zusatzinformationen, wie beispielsweise Messungen, übertragbar, sodass die Reaktionszeit bei auftretenden Anomalien zusätzlich reduziert wird.

Besonders vorteilhaft wird der mindestens eine Transformator mit einem Umrichter verbunden, wobei die Eingangsspannung und/oder die Ausgangsspannung zumindest teilweise im Umrichter ermittelt werden. Im Umrichter sind beispielsweise vorhandene Messstellen oder Messvorrichtungen verwendbar, was zu einer verbesserten Kostenposition führt. Weniger zusätzliche Messstellen erhöhen die Zuverlässigkeit des Systems.

Im Folgenden wird die Erfindung anhand der in den Figuren dargestellten Ausführungsbeispiele näher beschrieben und erläutert.

Es zeigen:

FIG 1     ein Blockschaltbild eines Antriebssystems 2,

FIG 2     ein Ablaufdiagramm eines Verfahrens zur Überwachung eines Transformators,

FIG 3     eine schematische Darstellung eines typischen Verlaufs einer Übertragungskennlinie eines Transformators und

FIG 4     eine schematische Darstellung eines typischen Verlaufs einer Übertragungskennlinie eines Transformators mit einem Schwellwert.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

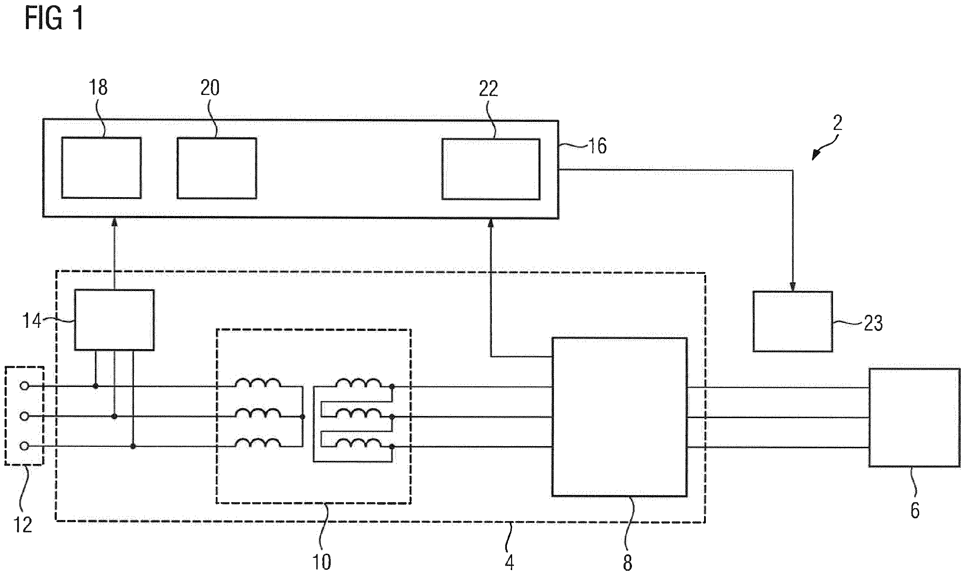

FIG 1 zeigt ein Blockschaltbild eines Antriebssystems 2, welches ein Umrichtersystem 4 und eine elektrische rotierende Maschine 6 umfasst, wobei die elektrische rotierende Maschine 6 als Elektromotor betrieben und vom Umrichtersystem 4 gespeist wird. Alternativ wird die elektrische rotierende Maschine 6 als Generator betrieben, wobei das Antriebssystem 2 den vom Generator erzeugten Strom über das Umrichtersystem 4 beispielsweise in ein Stromnetz einspeist.

Das Umrichtersystem 4 weist einen Umrichter 8 und einen Transformator 10 auf, wobei der Transformator 10 primärseitig über Eingangsklemmen 12 mit einem, insbesondere dreiphasigen, Versorgungsnetz verbindbar ist. Ferner ist der Transformator 10 sekundärseitig mit dem Umrichter verbunden, wobei eine galvanische Trennung zwischen der Primärseite und der Sekundärseite des Transformators 10 besteht. In den Umrichter 8 ist beispielsweise ein Gleichrichter und ein Wechselrichter integriert, wobei ein Leistungssignal einer ersten Frequenz über den Gleichrichter gleichgerichtet und über den Wechselrichter in ein Leistungssignal einer zweiten Frequenz umgewandelt wird. Optional ist der Umrichter 8 als Multilevel-Umrichter ausgeführt, welcher eine Mehrzahl von Zellen aufweist. Bei der Verwendung eines Multilevel-Umrichters weist der Transformator 10 sekundärseitig eine entsprechende Anzahl von Ausgängen auf, welche durch die transformatorische Kopplung voneinander entkoppelt sind. Durch die Entkopplung sind die Ausgänge der Zellen des Multilevel-Umrichters addierbar.

Über eine primärseitig angeschlossene Sensorvorrichtung 14 werden die Eingangsspannungen der Phasen des Transformators 10 gemessen und an eine zentrale IT-Infrastruktur 16 übertragen. Die Sensorvorrichtung 14 umfasst beispielsweise eine Spannungsmessvorrichtung, welche die erfassten Spannungswerte über eine Kommunikationsschnittstelle an die zentrale IT-Infrastruktur 16 überträgt. Alternativ weist die Sensorvorrichtung 14 eine, insbesondere resistive oder kapazitive, Kopplungsvorrichtung zum Spannungsabgriff auf, wobei die analogen Spannungswerte in der zentralen IT-Infrastruktur 16 weiterverarbeitet werden. Die zentrale IT-Infrastruktur 16 ist beispielsweise mindestens ein lokales Computersystem und/oder mindestens ein, insbesondere cloudbasiertes offenes, IoT-System. Die zentrale IT-Infrastruktur 16 stellt Speicherplatz, Rechenleistung und/oder Anwendungssoftware bereit. In einem IoT-System werden Speicherplatz, Rechenleistung und/oder Anwendungssoftware als Dienstleistung über das Internet zur Verfügung gestellt. Insbesondere umfasst die zentrale IT-Infrastruktur 16 ein lokales Computersystem, welches mit einem cloudbasierten offenen IoT-System verbunden ist.

Sekundärseitig werden die Ausgangsspannungen der Phasen des Transformators 10 innerhalb des Umrichters 8 ermittelt und an die zentrale IT-Infrastruktur 16 übertragen. Alternativ werden die Ausgangsspannungen analog zu den Eingangsspannungen sekundärseitig abgegriffen. Innerhalb der zentralen IT-Infrastruktur 16 wird ein objektspezifisches analytisches Modell, welches beispielsweise in einem, insbesondere cloudbasierten, Speicher einer zentralen Modellbibliothek 18 abgelegt wird, aus historischen Sensordaten erzeugt. Ferner wird ein objektspezifischer Schwellwert $V_{th}$ für die Eingangsspannungen und Ausgangsspannungen aus den historischen Sensordaten ermittelt. Ein analytisches Modell basiert auf einer mathematischen Beschreibung des Verhaltens des Transformators. Ein objektspezifisches Modell und ein objektspezifischer Schwellwert $V_{th}$ werden anhand der Sensordaten für den konkreten Transformator 10 erzeugt und hängen von der Betriebsart, der Leistung, der Netzspannung und einer Vielzahl weiterer Parameter des Transformators 10 ab. Das Modell und der Schwellwert $V_{th}$ werden mit Hilfe eines Machine-Learning-Algorithmus erzeugt. Ein Machine-Learning-Algorithmus benutzt beispielsweise ein neuronales Netz, welches mit historischen Daten trainiert wird. Die Erzeugung des objektspezifischen analytischen Modells sowie die Ermittlung des Schwellwerts $V_{th}$ werden in einer Auswerteeinheit 20 durchgeführt. Beispielsweise findet zumindest ein Teil der Auswertung cloudbasiert statt. Beispielsweise wird für die Eingangsspannung und die Ausgangsspannung des Transformators 10 jeweils der Maximalwert des Effektivwerts der jeweiligen Spannung Vinrmsmax, Voutrmsmax verwendet. Das objektspezifische analytische Modell ist durch den Zusammenhang

$$Vinrmsmax = Voutrmsmax + C$$

beschreibbar, wobei das Modell eine objektspezifische Konstante C umfasst, welche einer Differenz aus mindestens einer maximalen effektiven Eingangsspannung Vinrmsmax und mindestens einer korrespondierenden maximalen effektiven Ausgangsspannung Voutrmsmax des Transformators 10 entspricht. Die Konstante C wird während der Modellbildungsphase automatisch an den jeweiligen Transformator 10 angepasst.

Mit Hilfe der Auswerteeinheit 20 werden aktuelle Sensordaten mit Werten des auf historischen Daten basierenden objektspezifischen analytischen Modells verglichen, wobei das Modell zum Vergleich der aktuellen Sensordaten über eine Restful API abgerufen wird. Der Ablauf wird über eine Steuereinheit 22 gesteuert. Die aktuellen Sensordaten, welche um mehr als den objektspezifischen Schwellwert Vth von den Werten aus dem objektspezifischen analytischen Modell abweichen, werden gekennzeichnet. Bei einer einstellbaren Anzahl von Abweichungen wird, insbesondere automatisch, eine Warnung an einen Nutzer und/oder einen Servicemitarbeiter ausgegeben. Die Warnung wird beispielsweise über einen elektronischen Nachrichtendienst an einem, insbesondere mobilen, Nutzerendgerät 23 bereitgestellt. Elektronische Nachrichtendienste sind beispielsweise Email, SMS oder MMS. Mit der Warnung werden beispielsweise eine Größe und/oder ein Zeitstempel der Abweichungen bereitgestellt. Ein mobiles Nutzerendgerät 23 ist beispielsweise ein Smartphone oder ein Tablet.

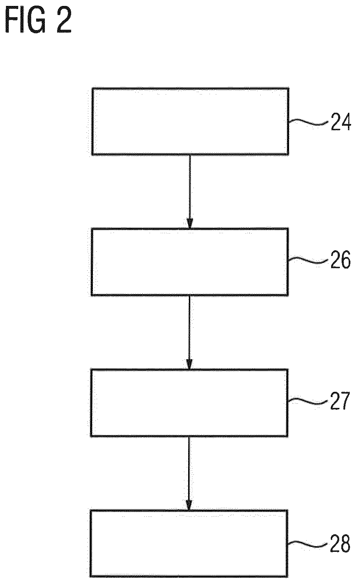

FIG 2 zeigt ein Ablaufdiagramm eines Verfahrens zur Überwachung eines Transformators 10. Bei der Modell- und Schwellwerterzeugung 24 werden aus historischen Sensordaten ein objektspezifisches analytisches Modell des Transformators 10 sowie ein objektspezifischer Schwellwert Vth erzeugt. Optional werden die historischen Daten vorverarbeitet, um unplausible Werte aufgrund von Sensorfehlern und Werte, die während des Aus-Zustandes des Antriebs gesammelt wurden, zu eliminieren. Die Sensordaten enthalten mindestens eine Eingangsspannung und eine zugehörige Ausgangsspannung des Transformators 10. Die historischen Sensordaten werden beispielsweise über Monate oder Jahre ermittelt. Auf die Modell- und Schwellwerterzeugung 24 erfolgt ein Vergleich 26 aktueller Sensordaten mit dem objektspezifischen analytischen Modell, welches auf historischen Sensordaten basiert. Daraufhin findet eine Kennzeichnung 26 aktueller Sensordaten, welche um mehr als den objektspezifischen Schwellwert Vth von den Werten aus dem objektspezifischen analytischen Modell abweichen, als anormale Werte statt. Schließlich erfolgt eine Warnung 28 bei einer einstellbaren Anzahl von anormalen Werten. Die weitere Ausgestaltung des Verfahrens zur Überwachung des Transformators 10 in FIG 2 entspricht der in FIG 1.

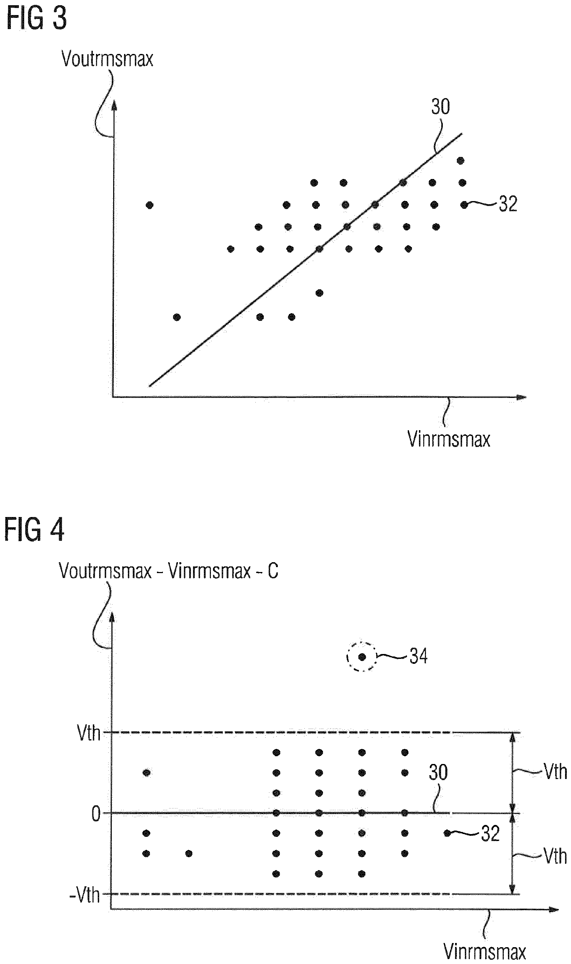

FIG 3 zeigt eine schematische Darstellung eines typischen Verlaufs einer Übertragungskennlinie 30 eines Transformators 10, wobei die maximale effektive Ausgangsspannung Voutrmsmax über die maximale effektive Eingangsspannung Vinrmsmax aufgetragen ist. Die Übertragungskennlinie 30 folgt, wie in FIG 1 beschrieben, dem Zusammenhang

$$Vinrmsmax = Voutrmsmax + C$$

Neben der Übertragungskennlinie 30 sind ermittelte Sensordatenpunkte 32 dargestellt.

FIG 4 zeigt eine schematische Darstellung eines typischen Verlaufs einer Übertragungskennlinie 30 eines Transformators mit einem objektspezifischen Schwellwert Vth. Zur einfacheren Darstellung des Schwellwerts Vth wird die Differenz der maximalen effektiven Ausgangsspannung Voutrmsmax zur maximalen effektiven Eingangsspannung Vinrmsmax und der Konstante C über die maximale effektive Eingangsspannung Vinrmsmax aufgetragen. Neben der in FIG 4 waagerecht verlaufenden Übertragungskennlinie 30 sind die in FIG 3 enthaltenen Sensordatenpunkte 32 dargestellt. Der objektspezifische Schwellwert Vth ist schlauchförmig um die Übertragungskennlinie 30 angeordnet. Einer der Sensordatenpunkte 32 weist eine Abweichung von der Übertragungskennlinie 30 auf, die größer als der objektspezifische Schwellwert Vth ist. Der Sensordatenpunkt 32 mit einer derartigen Modellabweichung wird als anormaler Wert 34 gekennzeichnet. Das weitere Verfahren entspricht dem in FIG 2.

Zusammenfassend betrifft die Erfindung ein Verfahren zur Überwachung mindestens eines Transformators 10. Damit das Überwachungsverfahren möglichst einfach und zuverlässig durchführbar ist, werden folgende Schritte vorgeschlagen: Erzeugen eines objektspezifischen analytischen Modells des Transformators 10 und eines objektspezifischen Schwellwerts Vth aus historischen Sensordaten, welche mindestens eine Eingangsspannung und eine Ausgangsspannung des Transformators 10 umfassen, mit Hilfe eines Machine-Learning-Algorithmus, Vergleichen von aktuellen Sensordaten mit Werten aus dem objektspezifischen analytischen Modell, Kennzeichnen aktueller Sensordaten, welche um mehr als den objektspezifischen Schwellwert Vth von den Werten aus dem objektspezifischen analytischen Modell abweichen, als anormale Werte 34 und Ausgabe einer Warnung bei einer einstellbaren Anzahl von anormalen Werten 34.

**Patentansprüche**

1. Verfahren zur Überwachung mindestens eines Transformators (10) umfassend:

- Erzeugen eines objektspezifischen analytischen Modells des Transformators (10) und eines objektspezifischen Schwellwerts (Vth) aus historischen Sensordaten, welche mindestens eine Eingangsspannung und eine Ausgangsspannung des Transformators (10) umfassen, mit Hilfe eines Machine-Learning-Algorithmus,
- Vergleichen von aktuellen Sensordaten mit Werten aus dem objektspezifischen analytischen Modell,
- Kennzeichnen aktueller Sensordaten, welche um mehr als den objektspezifischen Schwellwert (Vth) von den Werten aus dem objektspezifischen analytischen Modell abweichen, als anormale Werte (34) und
- Ausgabe einer Warnung bei einer einstellbaren Anzahl von anormalen Werten (34), wobei das Modell eine objektspezifische Konstante (C) umfasst, welche einer Differenz aus Effektivwerten mindestens einer Eingangsspannung und mindestens einer korrespondierenden Ausgangsspannung des Transformators (10) entspricht, wobei die objektspezifische Konstante (C) während der Modellbildungsphase automatisch an den jeweiligen Transformator (10) angepasst wird.

2. Verfahren nach Anspruch 1,
wobei die historischen Sensordaten zum Ausschließen unplausibler Werte vorverarbeitet werden.

3. Verfahren nach einem der vorherigen Ansprüche,
wobei für die Eingangsspannung und die Ausgangsspannung jeweils der Maximalwert des Effektivwerts der jeweiligen Spannung (Vinrmsmax, Voutrmsmax) verwendet werden.

4. Verfahren nach Anspruch 3,
wobei das Modell durch den Zusammenhang

$$Vinrmsmax = Voutrmsmax + C$$

darstellbar ist.

5. Verfahren nach einem der vorherigen Ansprüche,
wobei das Modell zum Vergleich der aktuellen Sensordaten über eine Restful API abgerufen wird.

6. Verfahren nach einem der vorherigen Ansprüche,
wobei eine Größe und/oder ein Zeitstempel der Abweichungen vom objektspezifischen analytischen Modell bereitgestellt wird.

7. Verfahren nach einem der vorherigen Ansprüche,
wobei bei einer einstellbaren Anzahl von anormalen Werten (34) ein Nutzer und/oder ein Servicemitarbeiter automatisch gewarnt wird.

8. Verfahren nach einem der vorherigen Ansprüche,
wobei die Warnung, insbesondere automatisch, über einen elektronischen Nachrichtendienst bereitgestellt wird.

9. Verfahren nach einem der vorherigen Ansprüche,

wobei der mindestens eine Transformator (10) mit einem Umrichter (8) verbunden ist,
wobei die Eingangsspannung und/oder die Ausgangsspannung zumindest teilweise im Umrichter ermittelt werden.

10. Steuereinheit (22) mit Mitteln zur Durchführung eines Verfahrens nach einem der Ansprüche 1 bis 9, wobei die Mittel zumindest eine Sensorvorrichtung (14) umfassen.

11. Computerprogramm zur Durchführung eines Verfahrens nach einem der Ansprüche 1 bis 9 bei Ablauf in einer Steuereinheit (22) nach Anspruch 10.

12. Computerprogrammprodukt mit einem Computerprogramm nach Anspruch 11.

13. Umrichtersystem (4) mit mindestens einem Umrichter (8), mindestens einem Transformator (10) und einer Steuereinheit (22) nach Anspruch 10.

14. Umrichtersystem (4) nach Anspruch 13,
wobei der mindestens eine Umrichter (8) als Multilevel-Umrichter ausgeführt ist.

15. Antriebssystem mit mindestens einem Umrichtersystem (4) nach einem der Ansprüche 13 oder 14 und mindestens einem Motor (6), welcher mit dem Umrichtersystem (4) verbunden ist.

**Claims**

1. Method for monitoring at least one transformer (10), comprising:

- producing an object-specific analytical model of the transformer (10) and an object-specific threshold value (Vth) from historical sensor data, which comprise at least an input voltage and an output voltage of the transformer (10), with the aid of a machine learning algorithm,
- comparing current sensor data with values from the object-specific analytical model,
- identifying current sensor data that deviate from the values from the object-specific analytical model by more than the object-specific threshold value (Vth) as abnormal values (34), and

- outputting a warning in the event of a settable number of abnormal values (34), wherein the model comprises an object-specific constant (C) that corresponds to a difference between root mean square values of at least one input voltage and at least one corresponding output voltage of the transformer (10), wherein the object-specific constant (C) is automatically adapted to the respective transformer (10) during the modelling phase.

2. Method according to Claim 1, wherein the historical sensor data are preprocessed to exclude implausible values.

3. Method according to either of the preceding claims, wherein the maximum value of the root mean square value of the respective voltage (Vinrmsmax, Voutrmsmax) is used in each case for the input voltage and the output voltage.

4. Method according to Claim 3, wherein the model can be represented by the relationship Vinrmsmax = Voutrmsmax + C.

5. Method according to one of the preceding claims, wherein the model for comparing the current sensor data is retrieved via RESTful API.

6. Method according to one of the preceding claims, wherein a size and/or a time stamp of the deviations from the object-specific analytical model are/is provided.

7. Method according to one of the preceding claims, wherein a user and/or a service employee are/is automatically warned in the event of a settable number of abnormal values (34) .

8. Method according to one of the preceding claims, wherein the warning is provided, in particular automatically, by way of an electronic message service.

9. Method according to one of the preceding claims,

   wherein the at least one transformer (10) is connected to a converter (8),
   wherein the input voltage and/or the output voltage are/is at least partly determined in the converter.

10. Control unit (22) having means for carrying out a method according to one of Claims 1 to 9, wherein the means comprise at least one sensor device (14).

11. Computer program for carrying out a method according to one of Claims 1 to 9 when run in a control unit (22) according to Claim 10.

12. Computer program product having a computer program according to Claim 11.

13. Converter system (4) having at least one converter (8), at least one transformer (10) and a control unit (22) according to Claim 10.

14. Converter system (4) according to Claim 13, wherein the at least one converter (8) is in the form of a multilevel converter.

15. Drive system having at least one converter system (4) according to either of Claims 13 and 14 and at least one motor (6) that is connected to the converter system (4).

**Revendications**

1. Procédé de contrôle d'au moins un transformateur (10) comprenant :

   la production d'un modèle analytique spécifique à un objet du transformateur (10) et d'une valeur (Vth) de seuil spécifique à un objet à partir de données historiques de capteur, qui comprennent au moins une tension d'entrée et une tension de sortie du transformateur (10), à l'aide d'un algorithme d'apprentissage automatique,
   la comparaison de données en cours de capteur à des valeurs tirées du modèles analytique spécifique à un objet,
   la caractérisation de données en cours de capteur, qui s'écartent, de plus de la valeur (Vth) de seuil spécifique à un objet, des valeurs du modèle analytique spécifique à un objet, comme valeurs (34) anormales et
   l'émission d'un avertissement pour un nombre réglable de valeurs (34) anormales, le modèle comprenant une constante (C) spécifique à un objet, qui correspond à une différence de valeurs efficaces d'au moins une tension d'entrée et d'au moins une tension de sortie correspondante du transformateur (10), dans lequel on adapte la constante (C) spécifique à un objet pendant la phase de constitution du modèle automatiquement au transformateur (10) respectif.

2. Procédé suivant la revendication 1, dans lequel on traite à l'avance les données historiques de capteur pour exclure des valeurs, qui ne sont pas plausibles.

**3.** Procédé suivant l'une des revendications précédentes,
dans lequel on utilise, pour la tension d'entrée et la tension de sortie, respectivement la valeur maximum de la valeur efficace, de la tension (Vinrmsmax, Voutrmsmax) respective.

**4.** Procédé suivant la revendication 3,
dans lequel le modèle peut être représenté par la relation Vinrmsmax = Voutrmsmax + C

**5.** Procédé suivant l'une des revendications précédentes,
dans lequel on fait appel au modèle pour la comparaison des données en cours de capteur par un Restful API.

**6.** Procédé suivant l'une des revendications précédentes,
dans lequel on met une dimension et/ou un horodatage des écarts à disposition du modèle analytique spécifique à un objet,.

**7.** Procédé suivant l'une des revendications précédentes,
dans lequel, pour un nombre réglable de valeurs (34) anormales, on avertit automatiquement un utilisateur et/ou un collaborateur d'entretien.

**8.** Procédé suivant l'une des revendications précédentes,
dans lequel on met l'alerte à disposition, notamment automatiquement, par un service électronique de message.

**9.** Procédé suivant l'une des revendications précédentes,

dans lequel le au moins un transformateur (10) est relié à un convertisseur (8),
dans lequel on détermine la tension d'entrée et/ou la tension de sortie au moins en partie dans le convertisseur.

**10.** Unité (22) de commande comprenant des moyens pour effectuer un procédé suivant l'une des revendications 1 à 9,
dans laquelle les moyens comprennent au moins un système (14) de capteur.

**11.** Programme d'ordinateur pour effectuer un procédé suivant l'une des revendications 1 à 9, lorsqu'il se déroule dans une unité (22) de commande suivant la revendication (10).

**12.** Produit de programme d'ordinateur ayant un programme d'ordinateur suivant la revendication 11.

**13.** Système (4) de convertisseur ayant au moins un convertisseur (8), au moins un transformateur (10) et une unité (22) de commande suivant la revendication (10).

**14.** Système (4) de convertisseur suivant la revendication 13, dans lequel le au moins un convertisseur (8) est réalisé en convertisseur à plusieurs niveaux.

**15.** Système d'entraînement, ayant au moins un système (4) de convertisseur suivant l'une des revendications 13 ou 14 et au moins un moteur (6), qui est relié au système (4) de convertisseur.

FIG 1

EP 3 661 041 B1

FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1923765 A1
- US 2017115335 A1
- US 10015184 B1
- DE 102013217672 B3
- EP 1786083 A1